# EUROPÄISCHE PATENTSCHRIFT

(11) **EP 3 469 968 B1**
(45) Veröffentlichungstag und Bekanntmachung des Hinweises auf die Patenterteilung: **24.02.2021**
(21) Anmeldenummer: 18198610.0
(22) Anmeldetag: 04.10.2018
(51) Int. Cl.: A47J 43/046, A47J 43/07, A47J 42/02

(54) **ELEKTROMOTORISCH BETRIEBENE KÜCHENMASCHINE MIT EINER MAHLVORRICHTUNG**
KITCHEN APPLIANCE OPERATED BY AN ELECTRIC MOTOR WITH A GRINDING DEVICE
ROBOT DE CUISINE ENTRAÎNÉ PAR MOTEUR ÉLECTRIQUE AVEC DISPOSITIF Á MOUDRE

(30) Priorität: 11.10.2017 DE 102017123689
(43) Veröffentlichungstag der Anmeldung: 17.04.2019
(73) Patentinhaber: Vorwerk & Co. Interholding GmbH, 42275 Wuppertal (DE)
(72) Erfinder: Büning, Thomas, 44795 Bochum (DE); Frielinghaus, Robert, 44799 Bochum (DE); Helmich, Martin, 47055 Duisburg (DE)
(74) Vertreter: Müller, Enno

(56) Entgegenhaltungen:
- WO-A1-2014/206944
- WO-A2-2016/092426
- CN-U- 204 909 176
- DE-B- 1 233 548
- DE-U- 1 778 725
- US-A- 3 542 178
- US-A1- 2011 256 273

## Beschreibung

### Gebiet der Technik

Die Erfindung betrifft eine elektromotorisch betriebene Küchenmaschine, nämlich kombiniertes Koch-Mix-Gerät, mit einem einen Elektromotor aufweisenden Basisgerät und einem mit dem Basisgerät verbindbaren Zubereitungsgefäß, welchem eine Heizeinrichtung zugeordnet ist und in welches ein mittels des Elektromotors rotierend antreibbares Rotationselement ragt, wobei mit dem Rotationselement ein Mahlelement verbindbar ist, welches mit einem Mahlbereich eines an dem Zubereitungsgefäß gehalterten Mahlgefäßes ein Mahlwerk bildet.

### Stand der Technik

Elektromotorisch betriebene Küchenmaschinen mit einem Basisgerät und einem mit dem Basisgerät verbindbaren Zubereitungsgefäß sind im Stand der Technik hinreichend bekannt.

Die Druckschriften WO 2003/075727 A1 und EP 1 269 898 B1 offenbaren derartige elektromotorische Küchenmaschinen, welche als kombinierte Koch-Mix-Geräte ausgebildet sind. Das Zubereitungsgefäß ist ein Rührgefäß, durch dessen Gefäßboden ein Rotationselement in das Rührgefäß ragt. An dem Rotationselement ist ein Messersatz mit einer Mehrzahl von Messern angeordnet, die zum Zerkleinern von Speisen dienen.

Des Weiteren offenbart die CN 204909176 U eine Küchenmaschine, welche ein mit dem Rotationselement verbundenes Mahlelement aufweist, welches mit einem Mahlbereich eines Mahlgefäßes ein Mahlwerk bildet.

### Zusammenfassung der Erfindung

Ausgehend davon ist es Aufgabe der Erfindung, das Mahlwerk der Küchenmaschine vorteilhaft weiterzubilden.

Zur Lösung der vorgenannten Aufgabe wird vorgeschlagen, dass das Mahlelement über ein zumindest einen elastischen Teilbereich aufweisendes Kupplungselement mit dem Rotationselement verbunden ist, wobei das Kupplungselement ein Federelement aufweist, welches einen Bewegungsspielraum sowohl parallel zu einer Längserstreckung einer Rotationsachse des Rotationselementes als auch senkrecht dazu bereitstellt. Das Kupplungselement kann ein Teilbereich des Mahlelementes oder ein Teilbereich des Rotationselementes sein. Darüber hinaus ist es möglich, dass das Kupplungselement ein sowohl zu dem Mahlelement, als auch zu dem Rotationselement separates Element ist. Das Kupplungselement dient zur Verbindung des Mahlelementes mit dem Rotationselement und gleichzeitig - durch die Ausbildung eines elastischen Teilbereiches - als flexibles Ausgleichselement, um eine axiale Neigung des Mahlelementes in dem Mahlgefäß und/oder eine radiale Verschiebung des Mahlelementes relativ zu dem Mahlgefäß auszugleichen. Des Weiteren werden schließlich auch Schläge des Mahlwerkes gedämpft, die bei dem Zerkleinern der Ausgangsprodukte auftreten. Das Kupplungselement weist ein Federelement auf. Das Federelement weist einen Bewegungsspielraum sowohl parallel zu einer Längserstreckung einer Rotationsachse des Rotationselementes als auch senkrecht dazu auf. Grundsätzlich kann das Federelement gemäß einer besonders einfachen Ausgestaltung ein flexibler Materialbereich des Kupplungselementes sein. Darüber hinaus ist es möglich, dass das Federelement nach der Art eines federnden Bügels oder Rings ausgestaltet ist, dessen Federebene parallel zu der Rotationsachse des Rotationselementes orientiert ist. Gemäß einer besonders bevorzugten Ausführung kann das Federelement ein federelastischer Kunststoffring sein, welcher einerseits mit dem Mahlelement und andererseits mit dem Rotationselement verbunden oder verbindbar ist.

Die Küchenmaschine weist ein mit dem Rotationselement verbindbares Mahlelement auf, welches mit einem Mahlbereich eines an dem Zubereitungsgefäß gehalterten Mahlgefäßes ein Mahlwerk bildet. Das mit dem Antrieb der Küchenmaschine verbindbare Mahlwerk ermöglicht als variabel verwendbares Zubehör der Küchenmaschine eine Zubereitung von Gerichten aus Ausgangsprodukten, die zunächst gemahlen werden müssen. Die Ausgangsprodukte können zum Beispiel Getreidekörner, Kaffeebohnen oder Gewürzkörner sein. Das Mahlwerk weist einen Mahlbereich des Mahlgefäßes auf, welches unbeweglich mit dem Zubereitungsgefäß verbunden wird, so dass sich die Rotationsbewegung des Rotationselementes nicht auf das Mahlgefäß überträgt. Das Rotationselement ist relativ zu dem Zubereitungsgefäß und damit auch zu dem Mahlgefäß rotierbar, so dass das an dem Rotationselement befestigte Mahlelement relativ zu dem Mahlbereich des Mahlgefäßes rotiert und dabei in dem Zwischenraum zwischen Mahlbereich und Mahlelement befindliche Ausgangsprodukte mahlt. Der Mahlbereich ist vorzugsweise ein Teilbereich einer Innenwandung des Mahlgefäßes, an welcher bevorratete Ausgangsprodukte nachströmen und dort von dem Mahlelement zerkleinert werden können. Das Mahlelement ist über das Rotationselement direkt mit einer Antriebswelle des Elektromotors verbunden. Somit ist ein Direktantrieb ermöglicht. Des Weiteren wird, im Gegensatz zum Zerhacken des Ausgangsproduktes mittels beispielsweise eines Messersatzes, ein schonendes Quetschmahlen ermöglicht, bei welchem sich das Ausgangsprodukt nur geringfügig erwärmt und ein gleichmäßigeres Mahlergebnis erhält. Sofern das Mahlwerk in Bezug auf den Abstand zwischen dem Mahlelement und dem Mahlbereich einstellbar ist, lässt sich der Mahlgrad feinjustieren. Das Mahlwerk kann für beispielsweise Gewürze mit einer grammgenauen Feindosierung ausgebildet sein. Insgesamt entfällt durch die Integration eines Mahlwerkes in die Küchenmaschine somit eine separate Kaffeemühle, Getreidemühle oder sonstige Mühle.

Insbesondere wird vorgeschlagen, dass das Mahlelement in das Mahlgefäß hineinragt, wobei der Mahlbereich das Mahlelement in Umfangsrichtung umgibt, so dass das Mahlelement bei einem Mahlvorgang innerhalb des Mahlbereiches rotiert. In dem die Ausgangsprodukte aufnehmenden Mahlgefäß befindet sich gleichzeitig das Mahlelement, so dass ein Teilbereich des Mahlgefäßes das Mahlwerk bildet. Insbesondere empfiehlt es sich, das Mahlwerk nach der Art einer üblichen Handkaffeemühle, insbesondere als Kegelmahlwerk auszugestalten, bei welcher ein konisches Mahlelement von einem zylindrischen Mahlbereich umgeben ist. Bei Betrieb des Mahlwerkes rotiert das Mahlelement innerhalb des zylindrischen Mahlbereiches, so dass die Zähne des Mahlelementes und des Mahlbereiches mechanisch auf die dazwischen befindlichen Ausgangsprodukte, beispielsweise Getreidekörner oder Kaffeebohnen, einwirken. Das zerkleinerte Mahlgut kann dann zunächst in einer separaten Kammer des Mahlgefäßes gesammelt werden oder alternativ auch direkt in das Zubereitungsgefäß ausgelassen werden, so dass das Mahlgut beispielsweise direkt einer zuzubereitenden Speise zugegeben werden kann, beispielsweise Getreide in einen zu rührenden Teig, Pfeffer in einen Eintopf und dergleichen. Während einer Speisenzubereitung ließe sich das Mahlgut des Weiteren direkt in eine mittels einer dem Zubereitungsgefäß zugeordneten Heizeinrichtung auf eine Zubereitungstemperatur geheizte Speise geben.

Zudem empfiehlt es sich besonders, dass das Mahlgefäß in dem Zubereitungsgefäß angeordnet ist. Es kann insbesondere vorgesehen sein, dass das Mahlgefäß an einer Wandung oder einem Deckel des Zubereitungsgefäßes befestigt, beispielsweise dort angeschraubt, ist. Bei einer Anordnung an einem Deckel des Zubereitungsgefäßes kann insbesondere vorgesehen sein, dass auch das Mahlgefäß durch den Deckel verschließbar ist, so dass sich der Nutzer nicht an dem Mahlwerk verletzen kann. Das Mahlgefäß kann beispielsweise nach außen ragende Vorsprünge aufweisen, die durch Bohrlöcher in dem Deckel des Zubereitungsgefäßes geführt und dort befestigt werden können. Durch die Anordnung des Mahlgefäßes und damit auch des Mahlwerkes innerhalb des Zubereitungsgefäßes ist der Anteil des austretenden Schalls sehr gering. Zum einen können die Ausgangsprodukte nicht gegen die Innenwandung des Zubereitungsgefäßes geschleudert werden, und zum anderen ist das Mahlwerk doppelt mit einer Wandung umgeben, nämlich zum einen mit der Wandung des Mahlgefäßes und zum anderen mit der Wandung des Zubereitungsgefäßes. Wenn die Verbindung zwischen dem Mahlgefäß und dem Zubereitungsgefäß des Weiteren über ein schalldämpfendes Element ausgeführt ist, kann die Schallemission noch weiter reduziert werden.

Alternativ zu einer Anordnung des Mahlgefäßes innerhalb des Zubereitungsgefäßes kann das Mahlgefäß auch auf das Zubereitungsgefäß aufgesetzt sein, d. h. außerhalb des Zubereitungsgefäßes angeordnet sein. In diesem Fall ist das Rotationselement der Küchenmaschine mittels einer Antriebswelle durch das Zubereitungsgefäß hindurch verlängert und tritt vorzugsweise in dem Bereich eines Deckels aus dem Zubereitungsgefäß heraus. Das Rotationselement bildet den Antrieb für das externe Mahlwerk. Des Weiteren kann die Antriebswelle bei einer Anordnung des Mahlgefäßes innerhalb des Zubereitungsgefäßes ebenfalls nach oben aus dem Zubereitungsgefäß herausgeführt sein und dort weiteres Zubehör antreiben, wie beispielsweise eine Zitronen-/ Orangenpresse, einen Fleischwolf, eine Nudelmaschine, einen Dosenöffner, eine Gemüsepresse und dergleichen.

Des Weiteren kann das Mahlelement trennbar mit dem Rotationselement verbunden sein. Gemäß dieser Ausgestaltung ist das Mahlelement ein separates Element, welches nach Bedarf besonders einfach mit dem Rotationselement verbunden oder von diesem getrennt werden kann. Es ist nicht erforderlich, das das Mahlelement aufweisende Rotationselement vollständig aus einem Rotationslager zu entnehmen und durch ein anderes Rotationselement zu ersetzen. Stattdessen kann lediglich das Mahlelement als Zusatzteil von dem Rotationselement getrennt werden, so dass das Rotationselement stets in der Küchenmaschine, nämlich in dem Rotationslager, verbleiben kann. Dies spart Zeit bei der Nutzung von unterschiedlichem Zubehör der Küchenmaschine.

Insbesondere wird vorgeschlagen, dass das Rotationselement einen Messersatz mit einer Mehrzahl von Messern aufweist. Das Rotationselement stellt gemäß dieser Ausführungsform gleichzeitig die Antriebswelle für einen Messersatz dar, welcher üblicherweise der Zerkleinerung oder dem Rühren von Lebensmitteln dient. Das Rotationselement kann somit einerseits einen Messersatz und andererseits das Mahlelement antreiben, so dass mehrere Arbeitsschritte innerhalb der Küchenmaschine gleichzeitig ausgeführt werden können, nämlich beispielsweise das Rühren einer in dem Zubereitungsgefäß befindlichen Speise und andererseits das Mahlen eines innerhalb des Mahlgefäßes befindlichen Ausgangsproduktes. Das gemahlene Mahlgut kann direkt in die zubereitete Speise innerhalb des Zubereitungsgefäßes geführt werden, nämlich beispielsweise durch einen Auslass an vorzugsweise einer Bodenseite des Mahlgefäßes.

Es wird vorgeschlagen, dass das Kupplungselement ein Mitnehmerelement zur lösbaren Verbindung des Kupplungselementes mit dem Rotationselement aufweist, wobei das Mitnehmerelement insbesondere zwischen benachbarten Messern eines Messersatzes festlegbar ist. Gemäß einer möglichen Ausführung kann das Mitnehmerelement ein gabel- oder hakenförmiger Aufsatz sein, dessen Zacken sich mit den Messern des Messersatzes in Kontakt befinden, insbesondere zwischen die Messer greifen. Somit wird bei Rotation des Messersatzes gleichzeitig auch das Mahlwerk angetrieben. Die Verbindung zwischen dem Mitnehmerelement und dem Rotationselement ist vorteilhaft so ausgeführt, dass diese während des Betriebs des Mahlwerks selbständig hält, insbesondere auch bei einer Erhöhung des Füllstandes innerhalb des Zubereitungsgefäßes.

Schließlich wird vorgeschlagen, dass das Mahlgefäß eine Mehrzahl von separaten Kammern zur Aufnahme von zu mahlenden Ausgangsprodukten und/oder zur Aufnahme von Mahlgut aufweist. Das Mahlwerk befindet sich in dem Mahlgehäuse, das die Ausgangsprodukte enthält und zuführt. Das Mahlgefäß ist vorzugsweise nach oben offen oder durch einen Deckel verschlossen. Des Weiteren kann wie vorgeschlagen ein Kammersystem mit mehreren Kammern vorgesehen sein, die einzeln oder gemeinsam, automatisch oder manuell geöffnet oder geschlossen werden können. Durch eine besondere Gehäuseform, eine Größe oder Form einer Öffnung des Mahlgefäßes oder einen Verschluss kann sichergestellt werden, dass der Nutzer nicht in das Mahlwerk eingreifen und sich verletzen kann. Als weitere Sicherheitsparameter können bestimmte Drehzahlbereiche oder Modi des das Rotationselement antreibenden Elektromotors gesperrt sein, wenn eine Detektionseinrichtung der Küchenmaschine eine Anwesenheit des Mahlelementes und/oder Mahlgefäßes innerhalb der Küchenmaschine erkennt. Die Detektionseinrichtung kann zum Beispiel mechanisch, magnetisch oder auf andere Art und Weise funktionieren.

### Kurze Beschreibung der Zeichnungen

Im Folgenden wird die Erfindung anhand von Ausführungsbeispielen näher erläutert. Es zeigen:
- Fig. 1: eine erfindungsgemäße Küchenmaschine in einer perspektivi-schen Ansicht,
- Fig. 2: einen Längsschnitt durch die Küchenmaschine,
- Fig. 3: einen vergrößerten Teilbereich eines Zubereitungsgefäßes bzw. Mahlgefäßes,
- Fig. 4: eine perspektivische Ansicht in ein Zubereitungsgefäß der Küchenmaschine mit einem darin befindlichen Mahlgefäß,
- Fig. 5: eine Explosionsdarstellung der in Fig. 4 gezeigten Kombination.

### Beschreibung der Ausführungsformen

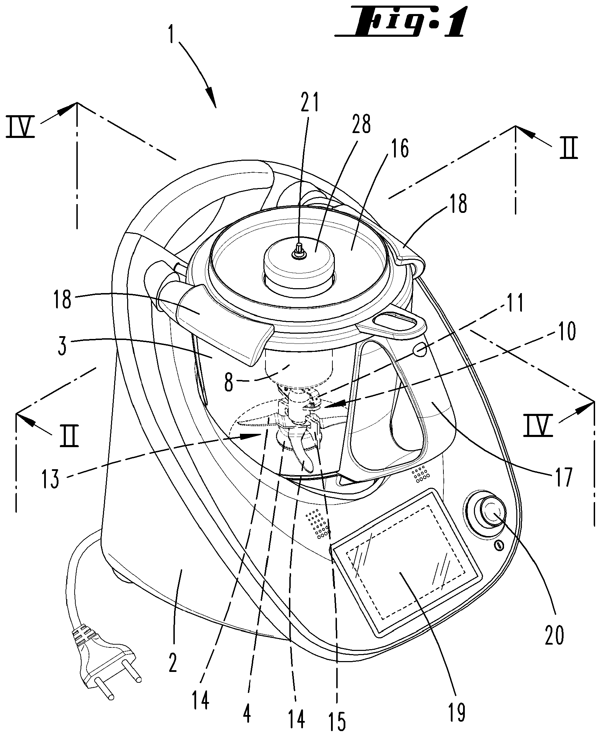

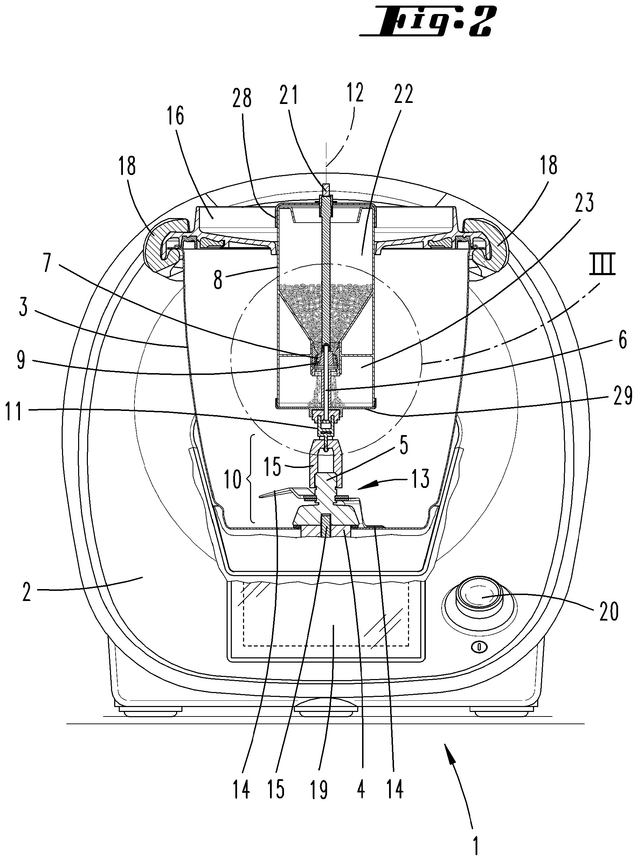

Figur 1 zeigt eine elektromotorisch betriebene Küchenmaschine 1, welche hier als kombiniertes Koch-Mix-Gerät ausgebildet ist. Die Küchenmaschine 1 weist ein Basisgerät 2 auf, in welches ein Zubereitungsgefäß 3 eingesetzt ist. Dem Zubereitungsgefäß 3 ist eine nicht weiter dargestellte Heizeinrichtung zugeordnet, hier vorzugsweise in den Gefäßboden des Zubereitungsgefäßes 3 integriert. In dem Gefäßboden des Zubereitungsgefäßes 3 ist des Weiteren ein Rotationslager 4 eingesetzt, welches das Rotationselement 5 rotierbar lagert. Das Rotationselement 5 ist mit einem Messersatz 13 verbunden, welcher eine Mehrzahl von Messern 14 aufweist. Mit dem Messersatz 13 verbunden ist des Weiteren ein Kupplungselement 10 für ein Mahlelement 6 eines Mahlwerkes 9 (siehe Figur 2). Das Kupplungselement 10 weist ein Mitnehmerelement 15 auf, welches mit flügelartigen Endbereichen zwischen die Messer 14 des Messersatzes 13 greift. Das Kupplungselement 10 weist des Weiteren ein Federelement 11 auf, welches das Kupplungselement 10 federnd mit dem Mahlelement 6 des Mahlwerkes 9 verbindet. Das Mahlelement 6 ist in einem Mahlgefäß 8 angeordnet, dessen Innenwandung einen Mahlbereich 7 zur Wechselwirkung mit dem Mahlelement 6 bereitstellt. Das Mahlelement 6 ist kegelstumpfförmig ausgebildet und rotiert, angetrieben von dem Rotationselement 5, innerhalb des zylindrischen Mahlbereiches 7, wobei Mahlelement 6 und Mahlbereich 7 als Mahlwerk 9 zusammenwirken.

Dem Zubereitungsgefäß 3 ist des Weiteren ein Deckel 16 zugeordnet, welcher mit Hilfe von Verschlusswalzen 18 fluiddicht mit dem Zubereitungsgefäß 3 verbindbar ist. Das Zubereitungsgefäß 3 weist des Weiteren einen Griff 17 zum Ergreifen des Zubereitungsgefäßes 3 durch einen Nutzer auf. Das Basisgerät 2 der Küchenmaschine 1 verfügt über ein Display 19 zur Anzeige von Statusparametern der Küchenmaschine 1, Rezeptvorschlägen, aktuellen Parametern des in dem Zubereitungsgefäß 3 befindlichen Zubereitungsgutes und dergleichen. Ein Schalter 20, hier beispielsweise als Druck-Dreh-Knopf ausgebildet, dient zum An- und Ausschalten der Küchenmaschine 1 und/ oder zur Auswahl und Bestätigung eines auf dem Display 19 angezeigten Befehls oder Parameters. Der Deckel 16 des Zubereitungsgefäßes 3 weist hier beispielsweise eine Öffnung auf, durch welche ein Teilbereich des Mahlgefäßes 8 hindurchragt und in Position, d. h. parallel zu einer Rotationsachse 12 des Rotationselementes 5, gehalten wird. Durch einen Gefäßdeckel 28 des Mahlgefäßes 8 ragt eine Antriebswelle 21 hindurch, welche eine drehfeste Verbindung zu dem Mahlelement 6 und damit auch zu dem Rotationselement 5 aufweist und somit bei Rotation des Rotationselementes 5 ebenfalls rotiert.

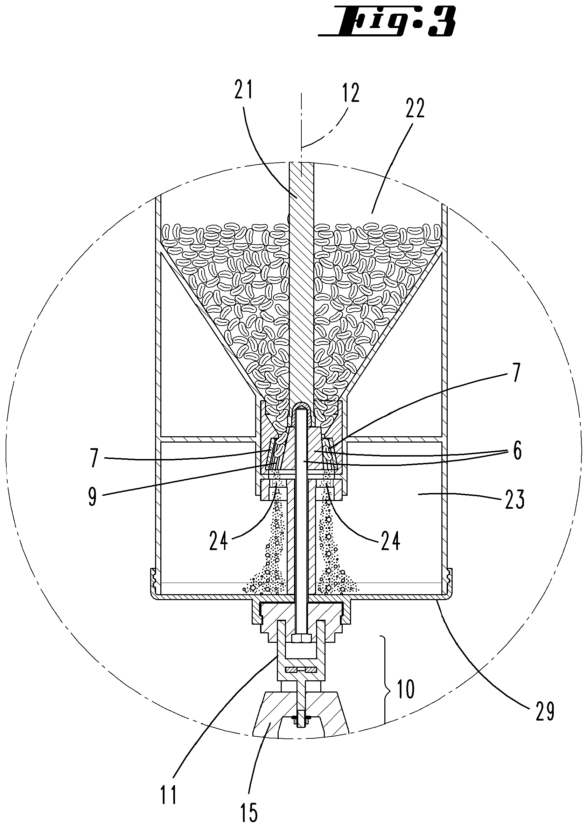

Figur 2 zeigt einen Längsschnitt durch das mit dem Basisgerät 2 der Küchenmaschine 1 verbundene Zubereitungsgefäß 3. Der Längsschnitt geht entlang der Rotationsachse 12 des Rotationselementes 5. Das in dem Zubereitungsgefäß 3 angeordnete Mahlgefäß 8 ist in Figur 3 des Weiteren vergrößert dargestellt.

Das Rotationselement 5 ist mittels des Elektromotors der Küchenmaschine 1 rotierbar. Durch die Verbindung des Mahlelementes 6 mit dem Rotationselement 5 über das Kupplungselement 10 rotiert das Mahlelement 6 bei Rotation des Rotationselementes 5 mit. Das Mahlelement 6 bildet zusammen mit dem zylindrischen Mahlbereich 7 des Mahlgefäßes 8 ein Mahlwerk 9. Das Mahlwerk 9 ist hier als Kegelmahlwerk ausgebildet und befindet sich innerhalb des Mahlgefäßes 8, welches eine Kammer 22 für ein zu mahlendes Ausgangsprodukt sowie eine Kammer 23 für das mittels des Mahlwerkes 9 gemahlene Mahlgut aufweist. Im Bereich des Mahlwerkes 9 befindet sich zwischen der Kammer 22 und der Kammer 23 eine Öffnung 24 (siehe Figur 3), durch welche das Mahlgut von der Kammer 22 in die Kammer 23 gelangen kann. Die Kammer 23 weist einen Boden 29 des Mahlgefäßes 8 auf, welcher über einen Schraubverschluss mit dem Mahlgefäß 8 verbunden ist, so dass die Kammer 23 bei Trennung des Bodens 29 von dem Mahlgefäß 8 entleert werden kann. Durch die trichterförmige Ausbildung der Kammer 22 rutscht das zu mahlende Ausgangsprodukt stets in den Mahlbereich 7 der Kammer 22 vor, so dass das Ausgangsprodukt kontinuierlich in das Mahlwerk 9 nachgeführt wird und dort gemahlen werden kann.

Der Antrieb des Mahlelementes 6 mittels des Rotationselementes 5 erfolgt über das Kupplungselement 10, welches das Rotationselement 5 und das Mahlelement 6 drehfest miteinander verbindet. Das Kupplungselement 10 greift mit dem gabelförmigen Mitnehmerelement 15 zwischen die Messer 14 des Messersatzes 13. Bei einer Rotation des Messersatzes 13 rotiert das Kupplungselement 10 und somit auch das daran angeordnete Mahlelement 6 mit. Das Federelement 11 des Kupplungselementes 10 ist ein sowohl parallel zu der Rotationsachse 12 als auch senkrecht dazu elastisches Element aus Metall oder Kunststoff, welches zum einen eine axiale Neigung des Mahlwerkes 9 in dem Mahlgefäß 8 verhindert, und zum anderen eine radiale Verschiebung des Mahlgefäßes 8 innerhalb des Zubereitungsgefäßes 3 ausgleicht. Des Weiteren dämpft das Federelement 11 Schläge auf das Rotationselement 5, welche durch die Mahltätigkeit des Mahlwerkes 9 gegebenenfalls auftreten.

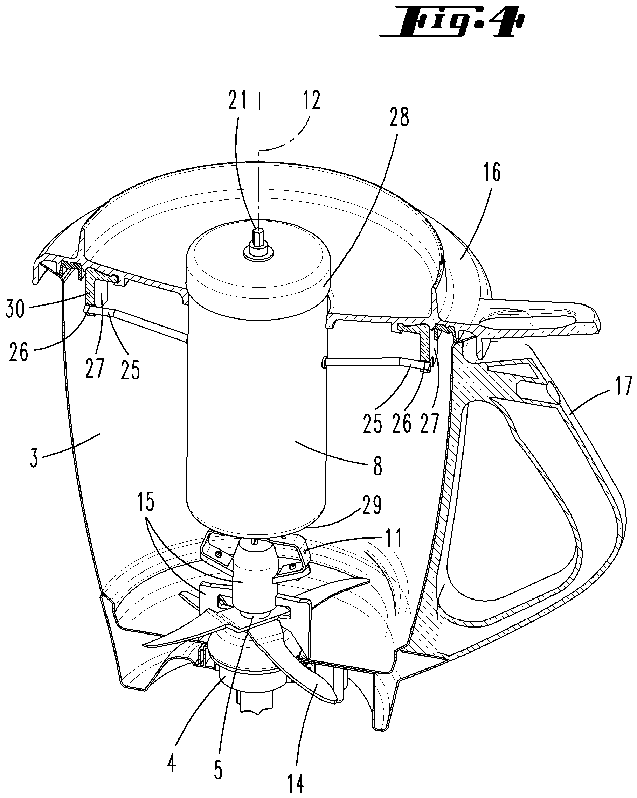

Um zu verhindern, dass das Mahlgefäß 8 bei einer Rotation des Mahlelementes 6 mitrotiert, wird das Mahlgefäß 8 an dem Zubereitungsgefäß 3 befestigt. Die Befestigung kann entweder an einer Wandung des Zubereitungsgefäßes 3 oder auch an dem Deckel 16 des Zubereitungsgefäßes 3 erfolgen. Figur 4 zeigt beispielsweise eine Befestigung des Mahlgefäßes 8 an dem Deckel 16. Das Mahlgefäß 8 trägt außenseitig zwei Befestigungsarme 25, welche in Aufnahmen 26 eingreifen, die an Vorsprüngen 27 des Deckels 16 ausgebildet sind. Die Aufnahmen 26 nehmen die Befestigungsarme 25 nach der Art eines Bajonettverschlusses auf. Sofern diese Verbindung zusätzlich mit einem schalldämpfenden Element ausgestattet ist, kann eine Schallübertragung von dem Mahlwerk 9 des Mahlgefäßes 8 auf das Zubereitungsgefäß 3 reduziert werden. Es sind auch andere Verbindungsmöglichkeiten zwischen dem Mahlgefäß 8 und dem Zubereitungsgefäß 3 denkbar. Gemäß einer alternativen Ausführung kann es beispielsweise vorgesehen sein, dass das Mahlgefäß 8 vollständig über dem Zubereitungsgefäß 3 angeordnet ist und sich somit vollständig außerhalb des Zubereitungsgefäßes 3 befindet. Vorteilhaft ist jedoch die Anordnung des Mahlgefäßes 8 innerhalb des Zubereitungsgefäßes 3, da dann eine zusätzliche Schalldämmung durch das umgebende Zubereitungsgefäß 3 geschaffen ist.

Obwohl dies hier nicht weiter dargestellt ist, kann zusätzlich vorgesehen sein, dass auch anderes Zubehör über das Rotationselement 5 der Küchenmaschine 1 angetrieben wird. Eine mit dem Mahlelement 6 bzw. dem Rotationselement 5 verbundene Antriebswelle 21, welche durch den Gefäßdeckel 28 nach außen ragt, kann beispielsweise verwendet werden, um eine Fruchtpresse, einen Fleischwolf, eine Nudelmaschine, einen Dosenöffner, eine Gemüsepresse oder anderes anzutreiben.

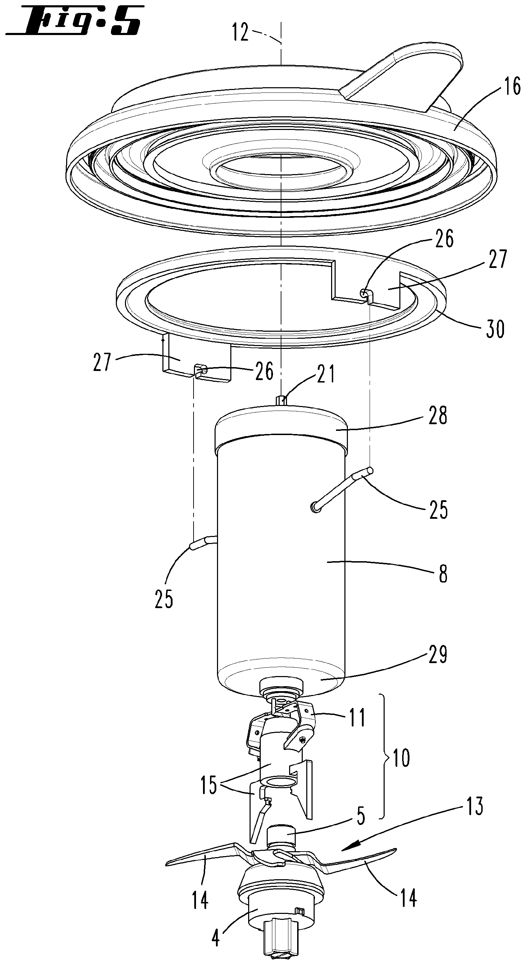

Figur 5 zeigt eine Explosionsdarstellung mit, entlang der Rotationsachse 12 von oben nach unten betrachtet, dem Deckel 16, einem Adapterring 30 für den Deckel 16, welcher Adapterring 30 die Vorsprünge 27 zur Aufnahme der Befestigungsarme 25 des Mahlgefäßes 8 bereitstellt, dem Mahlgefäß 8, dem Kupplungselement 10 aufweisend das Federelement 11 und das Mitnehmerelement 15 sowie dem Rotationselement 5, welches den Messersatz 13 trägt.

Durch die Verbindung des Mahlgefäßes 8 mit dem Zubereitungsgefäß 3, entweder innerhalb des Zubereitungsgefäßes 3 oder auf dieses aufgesetzt, ist ein Betrieb des Mahlwerkes 9 auch dann möglich, wenn ein Nutzer gerade eine Speise mit der Küchenmaschine 1 zubereitet. Beispielsweise kann in dem Mahlgefäß 7 Getreide gemahlen werden, während der Messersatz 13 aktuell Zutaten in dem Zubereitungsgefäß 3 zu einem Teig mischt. Des Weiteren kann das Mahlwerk 9 beispielsweise zeitgleich auch Pfefferkörner mahlen und diese einem in dem Zubereitungsgefäß 3 erwärmten Eintopf beigeben. Damit das Mahlgut unmittelbar aus der Kammer 23 in das Zubereitungsgefäß 3 übertreten kann, ist der Boden 29 entweder abnehmbar oder alternativ mit Öffnungen (nicht dargestellt) ausgestattet, durch welche das Mahlgut aus der Kammer 23 in das Zubereitungsgefäß 3 fallen kann.

### Liste der Bezugszeichen

| | | | |
|---|---|---|---|
| 1 | Küchenmaschine | 26 | Aufnahme |
| 2 | Basisgerät | 27 | Vorsprung |
| 3 | Zubereitungsgefäß | 28 | Gefäßdeckel |
| 4 | Rotationslager | 29 | Boden |
| 5 | Rotationselement | 30 | Adapterring |
| 6 | Mahlelement | | |
| 7 | Mahlbereich | | |
| 8 | Mahlgefäß | | |
| 9 | Mahlwerk | | |
| 10 | Kupplungselement | | |
| 11 | Federelement | | |
| 12 | Rotationsachse | | |
| 13 | Messersatz | | |
| 14 | Messer | | |
| 15 | Mitnehmerelement | | |
| 16 | Deckel | | |
| 17 | Griff | | |
| 18 | Verschlusswalze | | |
| 19 | Display | | |
| 20 | Schalter | | |
| 21 | Antriebswelle | | |
| 22 | Kammer | | |
| 23 | Kammer | | |
| 24 | Öffnung | | |
| 25 | Befestigungsarme | | |

## Patentansprüche

1. Elektromotorisch betriebene Küchenmaschine (1), nämlich kombiniertes Koch-Mix-Gerät, mit einem einen Elektromotor aufweisenden Basisgerät (2) und einem mit dem Basisgerät (2) verbindbaren Zubereitungsgefäß (3), welchem eine Heizeinrichtung zugeordnet ist und in welches ein mittels des Elektromotors rotierend antreibbares Rotationselement (5) ragt;, wobei mit dem Rotationselement (5) ein Mahlelement (6) verbindbar ist, welches mit einem Mahlbereich (7) eines an dem Zubereitungsgefäß (3) gehalterten Mahlgefäßes (8) ein Mahlwerk (9) bildet, **dadurch gekennzeichnet, dass** das Mahlelement (6) über ein zumindest einen elastischen Teilbereich aufweisendes Kupplungselement (10) mit dem Rotationselement (5) verbunden ist. ist, wobei das Kupplungselement (10) ein Federelement (11) aufweist, welches einen Bewegungsspielraum sowohl parallel zu einer Längserstreckung einer Rotationsachse (12) des Rotationselementes (5) als auch senkrecht dazu bereitstellt.

2. Küchenmaschine (1) nach Anspruch 1, **dadurch gekennzeichnet, dass** das Mahlelement (6) in das Mahlgefäß (8) hineinragt, wobei der Mahlbereich (7) das Mahlelement (6) in Umfangsrichtung umgibt, so dass das Mahlelement (6) bei einem Mahlvorgang innerhalb des Mahlbereiches (7) rotiert.

3. Küchenmaschine (1) nach einem der vorhergehenden Ansprüche, **dadurch gekennzeichnet dass** das Mahlwerk (9) als Kegelmahlwerk ausgebildet ist.

4. Küchenmaschine (1) nach einem der vorhergehenden Ansprüche, **dadurch gekennzeichnet, dass** das Mahlgefäß (8) in dem Zubereitungsgefäß (3) angeordnet ist.

5. Küchenmaschine (1) nach einem der vorhergehenden Ansprüche, **dadurch gekennzeichnet, dass** das Mahlelement (6) trennbar mit dem Rotationselement (5) verbunden ist.

6. Küchenmaschine (1) nach einem der vorhergehenden Ansprüche, **dadurch gekennzeichnet, dass** das Rotationselement (5) einen Messersatz (13) mit einer Mehrzahl von Messern (14) aufweist.

7. Küchenmaschine (1) nach einem der vorhergehenden Ansprüche, **dadurch gekennzeichnet, dass** das Kupplungsellemeht (10) ein Mitnehmerelement (15) zur lösbaren Verbindung des Kupplungselementes (10) mit dem Rotationselement (5) aufweist, wobei das Mitnehmerelement (15) insbesondere zwischen benachbarten Messern (14) eines Messersatzes (13) festlegbar ist.

8. Küchenmaschine (1) nach einem der vorhergehenden Ansprüche, **dadurch gekennzeichnet, dass** das Mahlgefäß (8) eine Mehrzahl von separaten Kammern (22, 23) zur Aufnahme von zu mahlenden Ausgangsprodukten und/oder zur Aufnahme von Mahlgut aufweist.

## Claims

1. An electric motor operated kitchen appliance (1), namely a combined cooking-mixing appliance, comprising a base unit (2) having an electric motor and a preparation vessel (3), to which a heating device is assigned and which can be connected to the base unit (2) and into which a rotating element (5) protrudes, which can be rotationally driven by means of the electric motor, wherein a grinding element (6), which, with a grinding area (7) of a grinding vessel (8) held on the preparation vessel (3), forms a grinder (9), can be connected to the rotating element (5), **characterized in that** the grinding element (6) is connected to the rotating element (5) via a coupling element (10) having at least one elastic partial area, wherein the coupling element (10) has a spring element (11), which provides a range of motion both parallel to a longitudinal extension of an axis of rotation (12) of the rotating element (5) and perpendicular thereto.

2. The kitchen appliance (1) according to claim 1, **characterized in that** the grinding element (6) protrudes into the grinding vessel (8), wherein the grinding area (7) surrounds the grinding element (6) in the circumferential direction, so that the grinding element (6) rotates in response to a grinding operation inside the grinding area (7).

3. The kitchen appliance (1) according to one of the preceding claims, **characterized in that** the grinder (9) is embodied as conical grinder.

4. The kitchen appliance (1) according to one of the preceding claims, **characterized in that** the grinding vessel (8) is arranged in the preparation vessel (3).

5. The kitchen appliance (1) according to one of the preceding claims, **characterized in that** the grinding element (6) is separably connected to the rotating element (5).

6. The kitchen appliance (1) according to one of the preceding claims, **characterized in that** the rotating element (5) has a set of knives (13) comprising a plurality of knives (14).

7. The kitchen appliance (1) according to one of the preceding claims, **characterized in that** the coupling element (10) has a carrier element (15) for releasably connecting the coupling element (10) to the rotating element (5), wherein the carrier element (15) can be secured in particular between adjacent knives (14) of a set of knives (13).

8. The kitchen appliance (1) according to one of the preceding claims, **characterized in that** the grinding vessel (8) has a plurality of separate chambers (22, 23) for accommodating base products to be ground and/or for accommodating grinding material.

## Revendications

1. Robot de cuisine électrique (1), à savoir un dispositif cuiseur-mixeur combiné, avec un dispositif de base (2) comprenant un moteur électrique et un récipient de préparation (3) pouvant être relié au dispositif de base (2), auquel est associé un dispositif de chauffage et dans lequel fait saillie un élément rotatif (5) pouvant être entraîné en rotation au moyen du moteur électrique, dans lequel un élément de mouture (6) peut être relié à l'élément rotatif (5), qui forme un dispositif de mouture (9) avec une région de mouture (7) d'un récipient de mouture (8) adjoint au récipient de préparation (3), **caractérisé en ce que** l'élément de mouture (6) est relié à l'élément rotatif (5) par le biais d'un élément d'accouplement (10) présentant au moins une zone partielle élastique, l'élément d'accouplement (10) présentant un élément de ressort (11) qui offre un jeu de déplacement aussi bien parallèlement à une extension longitudinale d'un axe de rotation (12) de l'élément rotatif (5) que perpendiculairement à celui-ci.

2. Robot de cuisine (1) selon la revendication 1, **caractérisé en ce que** l'élément de mouture (6) fait saillie dans le récipient de mouture (8), la région de mouture (7) entourant l'élément de mouture (6) dans la direction circonférentielle de manière que l'élément de mouture (6) tourne dans la région de mouture (7) pendant une opération de mouture.

3. Robot de cuisine (1) selon l'une des revendications précédentes, **caractérisé en ce que** le dispositif de mouture (9) est conçu comme un dispositif de mouture conique.

4. Robot de cuisine (1) selon l'une des revendications précédentes, **caractérisé en ce que** le récipient de mouture (8) est agencé dans le récipient de préparation (3) .

5. Robot de cuisine (1) selon l'une des revendications précédentes, **caractérisé en ce que** l'élément de mouture (6) est relié de manière séparable à l'élément rotatif (5) .

6. Robot de cuisine (1) selon l'une des revendications précédentes, **caractérisé en ce que** l'élément rotatif (5) comprend un jeu de lames (13) avec une pluralité de lames (14).

7. Robot de cuisine (1) selon l'une des revendications précédentes, **caractérisé en ce que** l'élément d'accouplement (10) présente un élément d'entrainement (15) pour relier de manière amovible l'élément d'accouplement (10) à l'élément rotatif (5), l'élément d'entrainement (15) pouvant être fixé en particulier entre des lames voisines (14) d'un jeu de lames (13).

8. Robot de cuisine (1) selon l'une des revendications précédentes, **caractérisé en ce que** le récipient de mouture (8) comporte plusieurs chambres séparées (22, 23) pour recevoir des produits de départ à moudre et/ou pour recevoir la matière moulue.
